Europäisches Patentamt

European Patent Office

Office européen des brevets

(11) Veröffentlichungsnummer: **0 214 385**
**A2**

## (12) EUROPÄISCHE PATENTANMELDUNG

(21) Anmeldenummer: **86108668.4**

(22) Anmeldetag: **25.06.86**

(51) Int. Cl.⁴: **H02K 21/14**

(30) Priorität: **09.09.85 DE 3532101**

(43) Veröffentlichungstag der Anmeldung:
**18.03.87 Patentblatt 87/12**

(84) Benannte Vertragsstaaten:
**AT BE CH DE FR GB IT LI LU NL SE**

(71) Anmelder: **Hübner Elektromaschinen AG**
**Planufer 92b**
**D-1000 Berlin 61(DE)**

(72) Erfinder: **Sawitzki, Uwe, Dipl.-Ing.**
**Friedensweg 15**
**D-1000 Berlin 49(DE)**

(74) Vertreter: **Weber, Otto Ernst, Dipl.-Phys.**
**Hofbrunnstrasse 36**
**D-8000 München 71(DE)**

(54) **Bürstenlose Induktionsmaschine.**

(57) Eine bürstenlose n-phasige und n-polige Induktionsmaschine, beispielsweise ein Gleichspannungs-Tachometerdynamo, kann dazu dienen, trapezförmige Ausgangsspannungen zu erzeugen, aus welchen durch Gleichrichtung oder durch elektronische Kommutierung eine Gleichspannung abgeleitet werden kann. Damit die zur Erzeugung des konstanten Teils der Trapezspannungen erforderliche Homogenität des Magnetfeldes erreicht wird, ist ein Ringkern mit mindestens einer gleichförmig verteilten, in sich kurzgeschlossenen Windung versehen. Abhängig von der Polzahl des Rotors weist diese Wicklung in Umfangsrichtung versetzte Anzapfungen zum Abgriff der Trapezspannungen auf.

Fig. 1

EP 0 214 385 A2

## Bürstenlose Induktionsmaschine

Die Erfindung betrifft eine bürstenlose n-phasige und n-polige Induktionsmaschine, beispielsweise einen Gleichspannungs-Tachometerdynamo, zum Erzeugen von Trapezspannungen, mit einem Magnete aufweisenden Rotor und mit einem mindestens eine Wicklung tragenden Stator.

Induktionsmaschinen zur Erzeugung von trapezförmigen Ausgangspannungen finden vielfältige Anwendungen in der Meß-, Regel-und Antriebstechnik, wo es erforderlich ist, ein drehzahlproportionales Gleichspannungssignal zur Verfügung zu haben. Hohe Anforderungen werden dabei beispielsweise an die Regelung von Antrieben gestellt, die gewöhnlich mit genauer Drehzahl laufen, wie beispielsweise Zentrifugen, Werkzeugmaschinen und Aufzüge, und bei welchen die Drehzahl in weiten Bereichen veränderbar sein muß.

Zur Erzeugung einer Gleichspannung, deren Höhe der Drehzahl und deren Polarität der Drehrichtung entspricht, ist die Verwendung eines Gleichspannungs-Tachometerdynamos bekannt, bei welchem die in den Wicklungen induzierten Spannungen einen sinus-ähnlichen Verlauf aufweisen. Durch die dichte Aneinanderreihung von Ausschnitten dieser Spannung mit Hilfe eines Kollektors mit entsprechend hoher Lamellenzahl wird eine Gleichspannung mit gewisser Restwelligkeit erzeugt. Will man den Kollektor durch elektronische Schalter ersetzen und soll gleichzeitig deren Anzahl möglichst klein sein, so muß die induzierte Wechselspannung einen möglichst langen geraden Bereich aufweisen. Es wird daher angestrebt, trapezförmige Spannungen zeitlich nacheinander versetzt zu induzieren. Diese können durch eine entsprechend gesteuerte, elektronische Kommutierungsvorrichtung oder durch eine Gleichrichteranordnung in der Weise nacheinander eingeschaltet und aneinander gereiht werden, daß eine einer Gleichspannung entsprechende Ausgangspannung abgreifbar ist. Die Gleichrichtung, d.h. das Herausgreifen des jeweils waagrechten Stückes der Trapezspannung durch zeitlich nacheinander angesteuerte elektronische Schalter ist an sich bekannt. Hierfür werden beispielsweise MOS-Schaltkreise eingesetzt.

Schwierigkeiten bereitet es jedoch, eine lückenlose Gleichspannung zu erzeugen, d.h.Trapezspannungen abzuleiten, deren Spannungsverlauf einen möglichst langen konstant verlaufenden Anteil aufweist, da Abweichungen von der Geraden sich nach der Gleichrichtung,d.h. nach der Aneinanderreihung der Trapezstücke, als Welligkeit bemerkbar machen. Wechselspannungsgeneratoren, deren Spannung mit Dioden gleichgerichtet wird, weisen beispielsweise eine Welligkeit

ihrer gleichgerichteten annähernd sinusförmigen Spannungen auf, die je nach Anzahl der eingesetzten Wicklungssysteme zwischen 7% und 13% liegt. Eine derartige hohe Welligkeit ist jedoch für Präzisions-Tachometerdynamos unter keinen Umständen tragbar.

Aus dem deutschen Gebrauchsmuster G 83 24 702 ist eine bürstenlose Induktionsmaschine der eingangs beschriebenen Art bekannt, mit in einem Luftspalt zwischen Rotor und Stator liegenden mehrphasigen, phasenverschoben antsteuerbaren Wicklungen. Jede Phase der Wicklung weist vier Spulen auf, die jeweils in zwei in radialer Richtung übereinanderliegenden Teilspulen unterteilt sind. Die Spulen sind in einem Spulenkörper in der Weise angeordnet, daß an den Kreuzungsstellen jeweils die beiden Teilspulen einer Phase zwischen den in Umfangsrichtung nachfolgenden beiden Spulen einer anderen Phase liegen, und daß sich dort die beiden Teilspulenpaare überlappen. Diese bekannte Induktionsmaschine hat jedoch den Nachteil, daß die Wicklungen mit einem relativ großen Fertigungsaufwand sehr exakt auf den Kunststoff-Spulenkörper im Luftspalt eingelegt werden müssen. Ein weiterer Nachteil ist darin zu sehen, daß an den Rändern der verwendeten Polschuhe Inhomogenitäten des Magnetfeldes unvermeidlich sind, obwohl eine Abflachung der Polschuhe bzw. Magnete vorgesehen ist. Die Magnete haben in Magnetmitte eine geringere Dicke, wodurch sich eine Polabhebung in der Magnetmitte ergibt. Dabei ist sowohl eine sehnenartige Abhebung mit nicht kreisförmiger Magnetkrümmung als auch eine Abhebung durch Versatz der beiden Magnetmittelpunkte mit entsprechend vergrößerten Krümmungsradien möglich. Ebenso wie bei den Wicklungen sind also auch bei den Polschuhen zusätzliche Fertigungsschritte erforderlich, die die Herstellung einer derartigen Induktionsmaschine relative aufwendig erscheinen lassen.

Die Erfindung liegt daher die **Aufgabe** zugrunde, eine Induktionsmaschine der eingangs genannten Art anzugeben, welche mit einfach geformten Polschuhen versehen ist und dabei ein homogenes Magnetfeld aufweist.

Diese Aufgabe wird dadurch gelöst, daß der Stator mindestens eine in sich kurzgeschlossene, über einen zum Rotor konzentrischen Ringkern gleichmäßig verteilte Wicklung aufweist, die mit mindestens zwei, in Umfangsrichtung gegeneinander versetzten Anzapfungen zum Abgriff der Trapezspannungen versehen ist.

Das Prinzip der Erfindung liegt darin, daß die für die Erzeugung des konstanten Teils der Trapezspannung erforderliche Homogenität nicht in das magnetische Feld, sondern in die Wicklung gelegt wird. Durch Aufteilung des Magnetflusses im Ringkern in zwei Teilflüsse, die den Ringkern in beiden Hälften durchsetzen, treten bei einer Drehung des Rotors pro Zeiteinheit die gleiche Anzahl von Windungen in das Magnetfeld ein, wie auf seiner Rückseite Windungen aus dem Magnetfeld heraustreten. Da die Windungen erfindungsgemäß gleichförmig über den Ringkern verteilt sind, werden also pro Zeiteinheit stets die gleiche Anzahl von Windungen neu vom Magnetfeld geschnitten.

Die Erfindung hat den Vorteil, daß Präzisions-Tachometerdynamos hergestellt werden können, welche sich durch eine Welligkeit von weniger als 1,5% auszeichnen. Ferner können möglicherweise aufgrund von Fertigungstoleranzen entstehende Unsymmetrien des Magnetfeldes im Luftspalt, die zu geringen Unterschieden der von den Rotormagneten induzierten Spannungen führen können, durch die in der Wicklung hervorgerufenen Kurzschlußströme ausgeglichen werden.

Vorzugsweise sind die Anzapfungen paarweise unter einem Versatz von jeweils 180° mechanisch angeordnet. Auf diese Weise sind zwei zueinander invertierte Trapezspannungen abgreifbar, die sich jeweils über 180° elektrisch erstrecken.

In einer vorteilhaften Weiterbildung der Erfindung sind bei n Polen n•2 Anzapfungen vorhanden, die paarweise zusammengehörig um

$$\frac{180° \text{ mech.}}{n}$$

versetzt sind. Bei einer derartigen Konfiguration, bei der der Rotor 4-oder mehrpolig ausgeführt ist, ist die Frequenz der ausgangsseitigen Trapezspannungen entsprechend erhöht.

Bei der elektronischen Gleichrichtung bzw. bei der Aneinanderreihung der Trapezspannungen hat es sich als vorteilhaft erwiesen, wenn m Wicklungen vorhanden sind ( m = 2,3..)und daß jede Wicklung mindestens ein Paar Anzapfungen aufweist.

Besonders günstig ist es, wenn die Anzapfungen der Wicklungen untereinander um

$$\frac{180° \text{ mech.}}{m}$$

versetzt sind.

In einer vorteilhaften Ausführungsform der Erfindung ist eine Wicklung vorhanden und weist der Rotor N = 2 Pole auf.

In einer weiteren vorteilhaften Ausführungsform sind bei einer Wicklung n = 4 Pole vorhanden. Eine besonders vorteilhafte Weiterbildung der Erfindung weist m = 2 Windungen und n = 2 Pole auf.

Unter wicklungstechnischen Gesichtspunkten erweist es sich als vorteilhaft, wenn in einer Ausführungsform der Erfindung der Anfang und das Ende der Wicklung in einer der Anzapfungen kurzgeschlossen ist.

Eine vorteilhafte Weiterbildung der Erfindung besteht darin, daß der Polbedeckungswinkel des Rotos so gewählt ist, daß sich jeweils hintereinander induzierte Trapezspannungen in ihrem konstanten Anteil überlappen.

In einer weiteren vorteilhaften Ausbildung der Erfindung ist der Stator konzentrisch um den Rotor angeordnet und besteht aus einem Ringblech-Paket.

Alternativ dazu ist der Stator seitlich am Rotor angeordnet und weist einen Ringkern aus einem aufgewickelten Blechstreifen auf. Diese beiden Maßnahmen haben den Vorteil, daß Wirbelströme im Ringkern vermieden werden.

Im folgenden wird die Erfindung anhand eines Ausführungsbeispieles weiter beschrieben.

Figur 1 zeigt schematisch eine Induktionsmaschine mit einem Stator und einem Rotor;

Figur 2 zeigt schematisch über der Zeit den ausgangsseitigen Spannungsverlauf der Induktiionsmaschine nach Fig. 1.

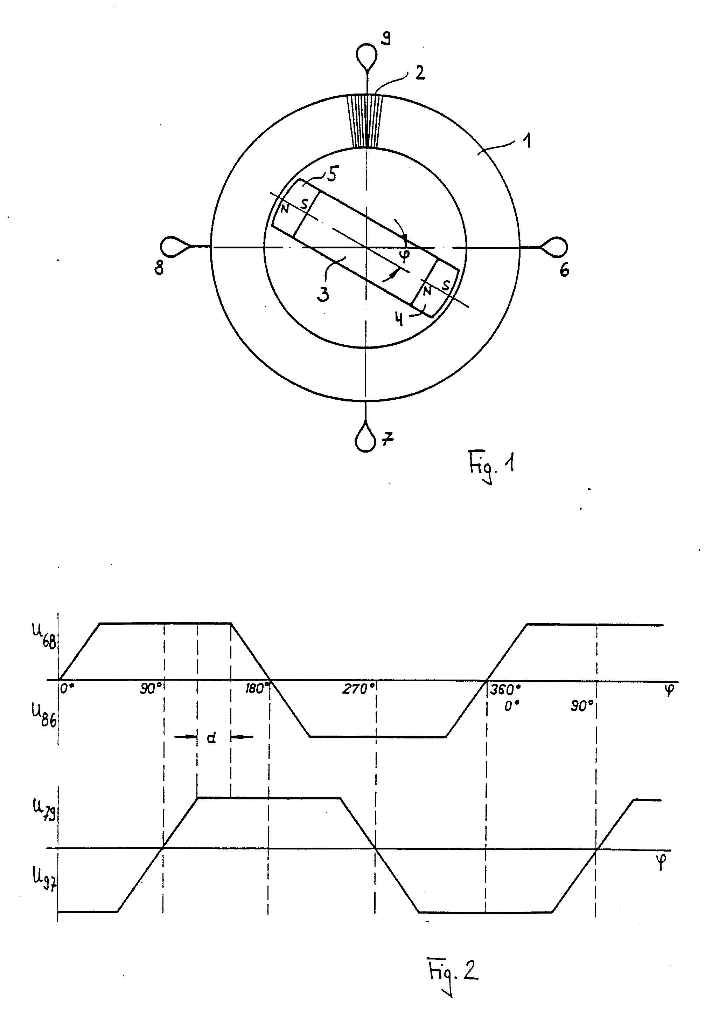

In Fig. 1 ist der Stator 1 schematisch als Ringkern wiedergegeben, der Windung an Windung gleichförmig mit einer Wicklung 2 versehen ist. Diese Wicklung 2 hat in dem wiedergegebenen Beispiel bei einem 2-polig ausgeführten Rotor 3 Anzapfungen 6,7,8,9, die jeweils um 90° mechanisch verseezt angeordnet sind. Die Anzapfungen 6,7,8,9 sind schematisch als Schlaufen dargestellt. Aus der Figur ist nicht entnehm bar, daß die Wicklung 2 endlos ausgeführt ist, d.h. daß der sich wicklungstechnisch ergebende Anfang mit dem Ende der Wicklung 2 verbunden ist.

Der Rotor 3 trägt zwei Magnete 4,5, deren Durchflutung den Luftspalt zwischen den Magneten 4,5 und dem Stator 1 durchsetzt. Sie teilt sich dort in zwei Teilflüsse auf, die den Stator in beiden Hälften durchsetzen.

In der 2-poligen Konfiguration der Fig. 1 ist beispielhaft eine Polfolge Nord-Süd-Nord-Süd gewählt. Es ergibt sich somit ein erster Teilfluß, der sich von dem rechts wiedergegebenen Südpol S über den oberen Teil des Ringkernes zum linken Nordpol N erstreckt und andererseits ein zweiter Teilfluß, der sich vom rechten Südpol S durch den unteren Teil des Stators zum links oben wiedergegebenen Nordpol N fortsetzt.

Der Drehwinkel des Rotors ist mit $\phi$ bezeichnet.

Im oberen Teil der Fig.2 ist über dem Drehwinkel $\phi$ der Verlauf einer Spannung $U_{68}$ aufgetragen, die an den Anzapfungen 6 und 8 abgreifbar ist. In der unteren Hälfte der Figur 2 ist entsprechend die Spannung $U_{79}$ wiedergegeben, die an den Anzapfungen 7 und 9 bei einer Drehung des Rotors 3 auftritt.

Im folgenden wird anhand der Figuren 1 und 2 die Funktion der Induktionsmaschine beschrieben, wenn sie beispielhaft als Tachometerdynamo eingesetzt ist.

Wenn sich der Rotor 3 dreht -beispielsweise wenn er unmittelbar oder mittelbar an eine Antriebswelle eines Elektromotors gekuppelt ist (nicht dargestellt) -so werden die Windungen der Wicklung 2 von einem magnetischen Feld geschnitten. Eine Windung umfaßt einen magnetischen Fluß $\emptyset$, der stetig mit der Zeit, d.h. dem Drehwinkel des Rotors 3 ansteigt. Die induzierte Spannung ist dann nach der Gleichung

$$u = -\frac{d\emptyset}{dt}$$

konstant. Bei Drehung der Magneten 4,5 treten pro Zeiteinheit die gleiche Anzahl von Windungen der Wicklung 2 in das Magnetfeld ein, wie auf der Rückseite Windungen aus dem Magnetfeld heraustreten. Da erfindungsgemäß die Windungen gleichförmig über den Ringkern des Stators verteilt sind, werden pro Zeiteinheit stets die gleiche Anzahl von Wicklungen neu im Magnetfeld geschnitten.Betrachtet man den in der Figur rechts liegenden Magnet 4 beispielsweise während einer Drehung in Uhrzeigersinn, so wird mit wachsendem Drehwinkel $\phi$ zuerst die Spannung $u_{68}$ induziert. Phasenverschoben wird die Spannung $u_{79}$ induziert, die an den Anzapfungen 7,9 abgegriffen werden kann.

In den Bereichen, in welchen die Magnete 4,5 an einer der Anzapfungen 6,7,8,9 vorbeilaufen, sinkt die induzierte Spannung jeweils auf Null ab, um ihre Polarität umzukehren. Solange bei einer Annäherung an eine der Anzapfungen der Drehwinkel kleiner ist als der halbe Öffnungswinkel des Magnetpoles des Rotors,sinkt die Spannung stetig bis auf Null ab. Bei Entfernen von der Anzapfung steigt dann die Spannung entsprechend an, bis der Drehwinkel $\phi$ größer ist als der halbe Öffnungswinkel der Magnetpoles. Solange der Drehwinkel $\phi$ größer ist als der Öffnungswinkel hat die solcherart induzierte Spannung einen konstanten Verlauf.

Wie die Figuren erkennen lassen, wird bei einem Drehwinkel von $\phi = 0°$, wenn der Rotor 3 in Richtung der Anzapfungen 6 und 8 steht, keine Spannung induziert, da sich die Teilflüsse symmetrisch zu den Anzapfungen 6 und 8 auf den oberen und den unteren Teil des Ringkernes erstrecken. Dabei ist gleichgültig, ob man die untere Wicklungshälfte oder die obere Wicklungshälfte auf dem Wege von der Anzapfung 6 zur Anzapfung 8 betrachtet. Die Spannung, die induziert wird, ist auf beiden Wegen identisch, da jeweils die gleiche Spannung induziert wird, wenn sich der Südpol des Magneten 4 vom Anschluß 6 entfernt und sich gleichzeitig der außenliegende Nordpol des Magneten 5 auf die Anzapfung 6 zubewegt. Da die Spannungen auf beiden Wegen identisch sind und diese Betrachtung sinngemäß auch für die Anzapfungen 7 und 9 gilt, kann die Spule in sich kurzgeschlossen sein. Die zwischen den paarweise zusammengehörenden Anzapfungen abgegriffenen Trapezspannungen werden über elektronische Schalter zu einer Gleichspannung zusammengeschaltet, die in den Figuren nicht wiedergegeben sind. Aus der Figur 2 geht hervor, daß in dem wiedergegebenen Beispiel zunächst die Spannung $u_{68}$ angeschaltet wird. Dann wird elektronisch auf die Spannung $u_{79}$ umgeschaltet. Darauf folgt die Anschaltung der Spannung $u_{86}$, die zur Spannung $u_{68}$ invertiert ist, um anschließend auf die invertierte Spannung $u_{97}$ zurückzugreifen. Eine mit $\alpha$ gekennzeichnete Überlappung der Spannungen $u_{68}$ und $u_{79}$ und der zugehörigen invertierten Spannungen $u_{86}$ und $u_{97}$, die zur einwandfreien Funktion der nachfolgenden elektronischen Schaltung erforderlich ist, wird durch die Wahl des Öffnungswinkels bzw.

Polbedeckungswinkels des Rotors 3 erreicht. Diese Überlappung betrifft jeweils die konstanten Anteile aufeinanderfolgender Trapezspannungen. Sie bewirkt, daß aus den Trapezspannungen eine Lückenlose Gleichspannung abgeleitet werden kann.

Obwohl die Erfindung anhand einer Induktionsmaschine mit einer einzigen Windung 2 und mit einem zweipoligen Polrad beispielhaft erläutert ist, sind ohne weiteres auch n-polige Ausführungen realisierbar. Dann sind die Anzapfungen 6,7,8,9 unter einem Winkel von

$$\frac{180^\circ \text{mech.}}{n}$$

angeordnet, wobei n für eine ganze Zahl steht. Ebenso ist es auch möglich, mehr als eine Wicklung vorzusehen. Bei m Wicklungen (m = 2,3...) liegen die Anzapfungen 6,7,8,9 der Wicklungen untereinander paarweise unter einem Winkel von

$$\frac{180^\circ \text{mech.}}{m} \;.$$

Abschließend ist anzuführen, daß die erfindungsgemäße Induktionsmaschine auch als Motor betrieben werden kann, der sich gleichförmig mit konstanten Drehmoment dreht, wenn trapezförmige Spannungen -entsprechend der Figur 2 -an die Anzapfungen 6,7,8,9 angelegt werden.

**Ansprüche**

1. Bürstenlose n-phasige und n-polige Induktionsmaschine, beispielsweise Gleichspannungs-Tachometerdynamo, zum Erzeugen von Trapezspannungen, mit einem Magnete aufweisenden Rotor und mit einem mindestens eine Wicklung tragenden Stator,

dadurch **gekennzeichnet** , daß der Stator (1) mind. eine in sich kurzgeschlossene, über einen zum Rotor konzentrischen Ringkern gleichmäßig verteilte Wicklung (2) aufweist, die mit mind. zwei in Umfangsrichtung gegeneinander versetzten Anzapfungen (6,7,8,9) zum Abgriff der Trapezspannungen versehen ist.

2. Induktionsmaschine nach Anspruch 1,

dadurch **gekennzeichnet** , daß die Anzapfungen (6,7,8,9) paarweise zugeordnet mit einem Versatz von jeweils 180° mechanisch angeordnet sind.

3. Induktionsmaschine nach Anspruch 1 oder 2,

dadurch **gekennzeichnet** , daß bei n Polen n≠2 Anzapfungen (6,7,8,9) vorhanden sind, die paarweise um

$$\frac{180^\circ \text{mech.}}{n}$$

versetzt sind.

4. Induktionsmaschine nach einem der vorhergehenden Ansprüche,

dadurch **gekennzeichnet** , daß m Wicklungen (2) vorhanden sind, und daß die Anzapfungen der Wicklungen (2) untereinander um

$$\frac{180°\text{mech.}}{m}$$

gegeneinander versetzt sind.

5. Induktionsmaschine nach einem der vorgehenden Ansprüche,

dadurch **gekennzeichnet**, daß eine Wicklung (2) vorhanden ist, und daß der Rotor (3) n = 2 Pole aufweist.

6. Induktionsmaschine nach einem der Ansprüche 1 bis 4,

dadurch **gekennzeichnet**, daß eine Wicklung (2) und ein Rotor (3) mit n = 4 Polen vorhanden sind.

7. Induktionsmaschine nach einem der Ansprüche 1 bis 4,

dadurch **gekennzeichnet**, daß m = 2 Wicklungen - (2) vorhanden sind, und der Rotor (3) n = 2 Pole aufweist.

8. Induktionsmaschine nach einem der vorhergehenden Ansprüche,

dadurch **gekennzeichnet**, daß Anfang und Ende einer Wicklung (2) in einer Anzapfung (6,7,8,9) kurzgeschlossen sind.

9. Induktionsmaschine nach einem der vorhergehenden Ansprüche,

dadurch **gekennzeichnet**, daß der Rotor (3) einen Polbedeckungswinkel aufweist, der so gewählt ist, daß sich bezüglich einer Anzapfung nacheinander induzierte Trapezspannungen in ihrem konstanten Anteil überlappen.

10. Induktionsmaschine nach einem der vorhergehenden Ansprüche,

dadurch **gekennzeichnet**, daß der Stator (1) um den Rotor (3) herum angeordnet ist und daß der Ringkern aus einem Blechpaket besteht.

11. Induktionsmaschine nach einem der Ansprüche 1 bis 9,

dadurch **gekennzeichnet**, daß die Magnete (3,4,) des Rotors (3) seitlich am Stator (1) angreifen, und daß der Ringkern aus einem aufgewickelten Blechstreifen besteht.

Fig. 1

Fig. 2